(19) **Europäisches Patentamt** / **European Patent Office** / **Office européen des brevets**

(11) **EP 3 840 389 A1**

(12) **EUROPEAN PATENT APPLICATION**

(43) Date of publication:
**23.06.2021 Bulletin 2021/25**

(21) Application number: **19217418.3**

(22) Date of filing: **18.12.2019**

(51) Int Cl.:
*H04N 21/2343* (2011.01)   *H04N 21/2365* (2011.01)
*H04N 21/4728* (2011.01)   *H04N 21/81* (2011.01)
*H04N 13/139* (2018.01)   *H04N 13/161* (2018.01)
*H04N 13/178* (2018.01)   *H04N 21/218* (2011.01)
*H04N 19/597* (2014.01)   *H04N 21/4402* (2011.01)
*H04N 21/2662* (2011.01)   *H04N 13/243* (2018.01)
*G06N 3/08* (2006.01)   *H04N 19/154* (2014.01)
*H04N 19/59* (2014.01)   *H04N 13/128* (2018.01)
*G06T 5/30* (2006.01)   *H04N 13/271* (2018.01)
*H04N 19/117* (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Koninklijke Philips N.V.**
**5656 AG Eindhoven (NL)**

(72) Inventors:
• **Van Geest, Bartholomeus Wilhelmus Damianus**
**5656 AE Eindhoven (NL)**
• **Varekamp, Christiaan**
**5656 AE Eindhoven (NL)**

(74) Representative: **Philips Intellectual Property & Standards**
**High Tech Campus 5**
**5656 AE Eindhoven (NL)**

(54) **CODING SCHEME FOR VIDEO DATA USING DOWN-SAMPLING/UP-SAMPLING AND NON-LINEAR FILTER FOR DEPTH MAP**

(57)    Methods of encoding and decoding video data are provided. In an encoding method, source video data comprising one or more source views is encoded into a video bitstream. Depth data of at least one of the source views is nonlinearly filtered and down-sampled prior to encoding. After decoding, the decoded depth data is up-sampled and nonlinearly filtered.

**FIG. 1**

## Description

FIELD OF THE INVENTION

The present invention relates to video coding. In particular, it relates to methods and apparatuses for encoding and decoding immersive video.

BACKGROUND OF THE INVENTION

Immersive video, also known as six-degree-of-freedom (6DoF) video, is video of a three-dimensional (3D) scene that allows views of the scene to be reconstructed for viewpoints that vary in position and orientation. It represents a further development of three-degree-of-freedom (3DoF) video, which allows views to be reconstructed for viewpoints with arbitrary orientation, but only at a fixed point in space. In 3DoF, the degrees of freedom are angular - namely, pitch, roll, and yaw. 3DoF video supports head rotations - in other words, a user consuming the video content can look in any direction in the scene, but cannot move to a different place in the scene. 6DoF video supports head rotations and additionally supports selection of the position in the scene from which the scene is viewed.

To generate 6DoF video requires multiple cameras to record the scene. Each camera generates image data (often referred to as texture data, in this context) and corresponding depth data. For each pixel, the depth data represents the depth at which the corresponding image pixel data is observed, by a given camera. Each of the multiple cameras provides a respective view of the scene. Transmitting all of the texture data and depth data for all of the views may not be practical or efficient, in many applications.

To reduce redundancy between the views, it has been proposed to prune the views and pack them into a "texture atlas", for each frame of the video stream. This approach attempts to reduce or eliminate overlapping parts among the multiple views, and thereby improve efficiency. The non-overlapping portions of the different views, which remain after pruning, may be referred to as "patches". An example of this approach is described in Alvaro Collet et al., "High-quality streamable free-viewpoint video", ACM Trans. Graphics (SIGGRAPH), 34(4), 2015.

SUMMARY OF THE INVENTION

It would be desirable to improve the quality and coding efficiency of immersive video. The approach of using pruning (that is, leaving out redundant texture patches) to produce texture atlases, as described above, can help to reduce the pixel rate. However, pruning views often requires a detailed analysis that is not error free and can result in a reduced quality for the end user. There is hence a need for robust and simple ways to reduce pixel rate.

The invention is defined by the claims.

According to examples in accordance with an aspect of the invention, there is provided a method of encoding video data comprising one or more source views, each source view comprising a texture map and a depth map, the method comprising:

receiving the video data;
processing the depth map of at least one source view to generate a processed depth map, the processing comprising:

nonlinear filtering, and
down-sampling; and

encoding the processed depth map and the texture map of the at least one source view, to generate a video bitstream.

Preferably, at least a part of the nonlinear filtering is performed before the down-sampling.

The inventors have found that nonlinear filtering of the depth map before down-sampling can help to avoid, reduce, or mitigate errors introduced by the down-sampling. In particular, nonlinear filtering may help to prevent small or thin foreground objects from disappearing partially or wholly from the depth map, due to the down-sampling. It has been found that nonlinear filtering may be preferable to linear filtering in this respect, because linear filtering may introduce intermediate depth values at the boundaries between foreground objects and the background. This makes it difficult for the decoder to distinguish between object boundaries and large depth gradients.

The video data may comprise 6DoF immersive video.

The nonlinear filtering may comprise enlarging the area of at least one foreground object in the depth map.

Enlarging the foreground object before down-sampling can help to ensure that the foreground object better survives the down-sampling process - in other words, that it is better preserved in the processed depth map.

A foreground object can be identified as a local group of pixels at a relatively small depth. Background can be identified as pixels at a relatively large depth. The peripheral pixels of foreground objects can be distinguished locally from the background by applying a threshold to the depth values in the depth map, for example.

The nonlinear filtering may comprise morphological filtering, in particular grayscale morphological filtering, for example a max filter, a min filter, or another ordinal filter. When the depth-map contains depth-levels with special meaning e.g. depth level zero indicates a non-valid depth, such depth-levels should preferably be considered foreground despite their actual value. As such these levels are preferably preserved after subsampling. Consequently their area may be enlarged as well.

The nonlinear filtering may comprise applying a filter designed using a machine learning algorithm.

The machine learning algorithm may be trained to reduce or minimize a reconstruction error of a reconstructed depth map after the processed depth map has been encoded and decoded.

The trained filter may similarly help to preserve foreground objects in the processed (down-sampled) depth map.

The method may further comprise designing a filter using a machine learning algorithm, wherein the filter is designed to reduce a reconstruction error of a reconstructed depth map after the processed depth map has been encoded and decoded, and wherein the nonlinear filtering comprises applying the designed filter.

The nonlinear filtering may comprise processing by a neural network and the design of the filter may comprise training the neural network.

The non-linear filtering may be performed by a neural network comprising a plurality of layers and the down-sampling may performed between two of the layers.

The down-sampling may be performed by a max-pooling (or min-pooling) layer of the neural network.

The method may comprise processing the depth map according to a plurality of sets of processing parameters, to generate a respective plurality of processed depth maps, the method further comprising: selecting the set of processing parameters that reduces a reconstruction error of a reconstructed depth map after the respective processed depth map has been encoded and decoded; and generating a metadata bitstream identifying the selected set of parameters.

This can allow the parameters to be optimized for a given application or for a given video sequence.

The processing parameters may include a definition of the nonlinear filtering and/or a definition of the downsampling performed. Alternatively, or in addition, the processing parameters may include a definition of processing operations to be performed at a decoder when reconstructing the depth map.

For each set of processing parameters, the method may comprise: generating the respective processed depth map according to the set of processing parameters; encoding the processed depth map to generate an encoded depth map; decoding the encoded depth map; reconstructing the depth map from the decoded depth map; and comparing the reconstructed depth map with the depth map of the at least one source view to determine the reconstruction error.

According to another aspect, there is provided a method of decoding video data comprising one or more source views, the method comprising:

receiving a video bitstream comprising an encoded depth map and an encoded texture map for at least one source view;
decoding the encoded depth map, to produce a decoded depth map;
decoding the encoded texture map, to produce a decoded texture map; and
processing the decoded depth map to generate a reconstructed depth map, wherein the processing comprises:

up-sampling, and
nonlinear filtering.

The method may further comprise, before the step of processing the decoded depth map to generate the reconstructed depth map, detecting that the decoded depth map has a lower resolution than the decoded texture map.

In some coding schemes, the depth map may be down-sampled only in certain cases, or only for certain views. By comparing the resolution of the decoded depth map with the resolution of the decoded texture map, the decoding method can determine whether down-sampling was applied at the encoder. This can avoid the need for metadata in a metadata bitstream to signal which depth maps were down sampled and the extent to which they were down sampled. (In this example, it is assumed that the texture map is encoded at full resolution.)

In order to generate the reconstructed depth map, the decoded depth map may be up-sampled to the same resolution as the decoded texture map.

Preferably, the nonlinear filtering in the decoding method is adapted to compensate for the effect of the nonlinear filtering that was applied in the encoding method.

The nonlinear filtering may comprise reducing the area of at least one foreground object in the depth map. This may be appropriate when the nonlinear filtering during encoding included increasing the area of the at least one foreground object.

The nonlinear filtering may comprise morphological filtering, particularly grayscale morphological filtering, for example a max filter, a min filter, or another ordinal filter.

The nonlinear filtering during decoding preferably compensates for or reverses the effect of the nonlinear filtering during encoding. For example, if the nonlinear filtering during encoding comprises a max filter (grayscale dilation) then the nonlinear filtering during decoding may comprise a min filter (grayscale erosion), and vice versa When the depth-map contains depth-levels with a special meaning for example depth level zero indicates a non-valid depth, such depth-levels should preferably be considered foreground despite their actual value.

Preferably, at least a part of the nonlinear filtering is performed after the up-sampling. Optionally, all of the nonlinear filtering is performed after the up-sampling.

The processing of the decoded depth map may be based at least in part on the decoded texture map. The inventors have recognized that the texture map contains useful information for helping to reconstruct the depth map. In particular, where the boundaries of foreground objects have been changed by the nonlinear filtering during encoding, analysis of the texture map can help to compensate for or reverse the changes.

The method may comprise: up-sampling the decoded depth map; identifying peripheral pixels of at least one foreground object in the up-sampled depth map; determining, based on the decoded texture map, whether the peripheral pixels are more similar to the foreground object or to the background; and applying nonlinear filtering only to peripheral pixels that are determined to be more similar to the background.

In this way, the texture map is used to help identify pixels that have been converted from background to foreground as a result of the nonlinear filtering during encoding. The nonlinear filtering during decoding may help to revert these identified pixels to be part of the background.

The nonlinear filtering may comprise smoothing the edges of at least one foreground object.

The smoothing may comprise: identifying peripheral pixels of at least one foreground object in the up-sampled depth map; for each peripheral pixel, analyzing the number and/or arrangement of foreground and background pixels in a neighborhood around that peripheral pixel; based on a result of the analyzing, identifying outlying peripheral pixels that project from the object into the background; and applying nonlinear filtering only to the identified peripheral pixels.

The analyzing may comprise counting the number of background pixels in the neighborhood, wherein a peripheral pixel is identified as an outlier from the object if the number of background pixels in the neighborhood is above a predefined threshold.

Alternatively or in addition, the analyzing may comprise identifying a spatial pattern of foreground and background pixels in the neighborhood, wherein the peripheral pixel is identified as an outlier if the spatial pattern of its neighborhood matches one or more predefined spatial patterns.

The method may further comprise receiving a metadata bitstream associated with the video bitstream, the metadata bitstream identifying a set of parameters, the method optionally further comprising processing the decoded depth map according to the identified set of parameters.

The processing parameters may include a definition of the nonlinear filtering and/or a definition of the up-sampling to be performed.

The nonlinear filtering may comprise applying a filter designed using a machine learning algorithm.

The machine learning algorithm may be trained to reduce or minimize a reconstruction error of a reconstructed depth map after the processed depth map has been encoded and decoded.

The filter may be defined in a metadata bitstream associated with the video bitstream.

Also provided is a computer program comprising computer code for causing a processing system to implement a method as summarized above when said program is run on the processing system.

The computer program may be stored on a computer-readable storage medium. This may be a non-transitory storage medium.

According to another aspect, there is provided a video encoder configured to encode video data comprising one or more source views, each source view comprising a texture map and a depth map, the video encoder comprising:

an input, configured to receive the video data;
a video processor, configured to process the depth map of at least one source view to generate a processed depth map, the processing comprising:

nonlinear filtering, and
down-sampling;

an encoder, configured to encode the texture map of the at least one source view, and the processed depth map, to generate a video bitstream; and
an output, configured to output the video bitstream.

According to still another aspect, there is provided a video decoder configured to decode video data comprising one or more source views, the video decoder comprising:

a bitstream input, configured to receive a video bitstream, wherein the video bitstream comprises an encoded depth map and an encoded texture map for at least one source view;
a first decoder, configured to decode from the video bitstream the encoded depth map, to produce a decoded depth map;
a second decoder, configured to decode from the video bitstream the encoded texture map, to produce a decoded texture map;
a reconstruction processor, configured to process the decoded depth map to generate a reconstructed depth map, wherein the processing comprises:

up-sampling, and
nonlinear filtering,

and an output, configured to output the reconstructed depth map.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates an example of encoding and decoding immersive video using existing video codecs;
Fig. 2 is a flowchart showing a method of encoding video data according to an embodiment;
Fig. 3 is a block diagram of a video encoder according to an embodiment;
Fig. 4 is a flowchart illustrating a method of encoding video data according to a further embodiment;
Fig. 5 is a flowchart showing a method of decoding video data according to an embodiment;
Fig. 6 is a block diagram of a video decoder according to an embodiment;
Fig. 7 illustrates a method for applying nonlinear filtering selectively to particular pixels in a decoding method according to an embodiment;
Fig. 8 is a flowchart illustrating a method of decoding video data according to a further embodiment; and
Fig. 9 illustrates the use of neural network processing to encode and decode video data according to an embodiment.

DETAILED DESCRIPTION OF THE EMBODIMENTS

The invention will be described with reference to the Figures.
It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.
Methods of encoding and decoding immersive video are disclosed. In an encoding method, source video data comprising one or more source views is encoded into a video bitstream. Depth data of at least one of the source views is nonlinearly filtered and down-sampled prior to encoding. Down-sampling the depth map helps to reduce the volume of data to be transmitted and therefore helps to reduce the bit rate. However, the inventors have found that simply down-sampling can lead to thin or small foreground objects, such as cables, disappearing from the down-sampled depth map. Embodiments of the present invention seek to mitigate this effect, and to preserve small and thin objects in the depth map.

Embodiments of the present invention may be suitable for implementing part of a technical standard, such as ISO/IEC 23090-12 MPEG-I Part 12 Immersive Video. Where possible, the terminology used herein is chosen to be consistent with the terms used in MPEG-I Part 12. Nevertheless, it will be understood that the scope of the invention is not limited to MPEG-I Part 12, nor to any other technical standard.
It may be helpful to set out the following definitions/explanations:
A "3D scene" refers to visual content in a global reference coordinate system.
An "atlas" is an aggregation of patches from one or more view representations after a packing process, into a picture pair which contains a texture component picture and a corresponding depth component picture.
An "atlas component" is a texture or depth component of an atlas.
"Camera parameters" define the projection used to generate a view representation from a 3D scene.
"Pruning" is a process of identifying and extracting occluded regions across views, resulting in patches.
A "renderer" is an embodiment of a process to create a viewport or omnidirectional view from a 3D scene representation, corresponding to a viewing position and orientation.
A "source view" is source video material before encoding that corresponds to the format of a view representation, which may have been acquired by capture of a 3D scene by a real camera or by projection by a virtual camera onto a surface using source camera parameters.
A "target view" is defined as either a perspective viewport or omnidirectional view at the desired viewing position and orientation.
A "view representation" comprises 2D sample arrays of a texture component and a corresponding depth component, representing the projection of a 3D scene onto a surface using camera parameters.
A machine-learning algorithm is any self-training algorithm that processes input data in order to produce or predict output data. In some embodiments of the present invention, the input data comprises one or more views decoded from a bitstream and the output data comprises a prediction/reconstruction of a target view.
Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian model are suitable alternatives.
The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g. the same type of transformation, sigmoid etc. but with different weightings). In the course of processing input data, the mathematical operation of each neuron is performed on the input data to produce a numerical output, and the outputs of each layer in the neural network are fed into one or more other layers (for example, sequentially). The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, where the machine-learning algorithm is formed from a neural network, (weightings of) the mathematical operation of each neuron may be modified until the error converges. Known methods of modifying a neural network include gradient descent, backpropagation algorithms and so on.

A convolutional neural network (CNN, or ConvNet) is a class of deep neural networks, most commonly applied to analyzing visual imagery. CNNs are regularized versions of multilayer perceptrons.

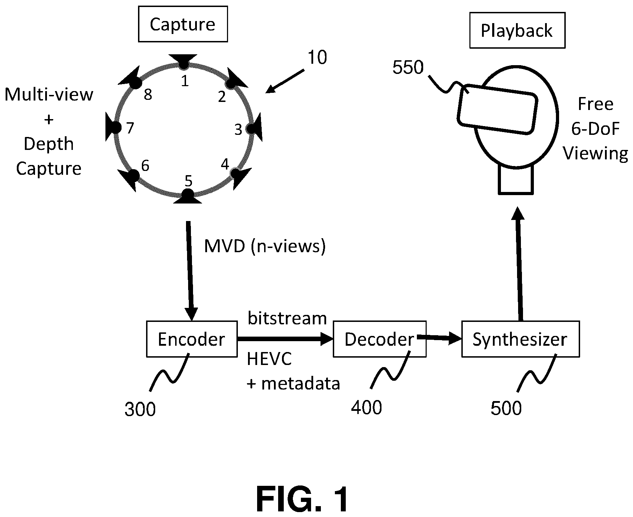

Fig. 1 illustrates in simplified form a system for encoding and decoding immersive video. An array of cameras 10 is used to capture a plurality of views of a scene. Each camera captures conventional images (referred to herein as texture maps) and a depth map of the view in front of it. The set of views, comprising texture and depth data, is provided to an encoder 300. The encoder encodes both the texture data and the depth data, into a conventional video bitstream - in this case, a high efficiency video coding (HEVC) bitstream. This is accompanied by a metadata bitstream, to inform a decoder 400 of the meaning of the different parts of the video bitstream. For example, the metadata tells the decoder which parts of the video bitstream corresponds to texture maps and which corresponds to depth maps. Depending on the complexity and flexibility of the coding scheme, more or less metadata may be required. For example, a very simple scheme may dictate the structure of the bitstream very tightly, such that little or no metadata is required to unpack it at the decoder end. With a greater number of optional possibilities for the bitstream, greater amounts of metadata will be required.

The decoder 400 decodes the encoded views (texture and depth). It passes the decoded views to a synthesizer 500. The synthesizer 500 is coupled to a display device, such as a virtual reality headset 550. The headset 550 requests the synthesizer 500 to synthesize and render a particular view of the 3-D scene, using the decoded views, according to the current position and orientation of the headset 550.

An advantage of the system shown in Fig. 1 is that it is able to use conventional, 2-D video codecs to encode and to decode the texture and depth data. However, a disadvantage is that there is a large amount of data to encode, transport, and decode. It would thus be desirable to reduce the data rate, while compromising on the quality of the reconstructed views as little as possible.

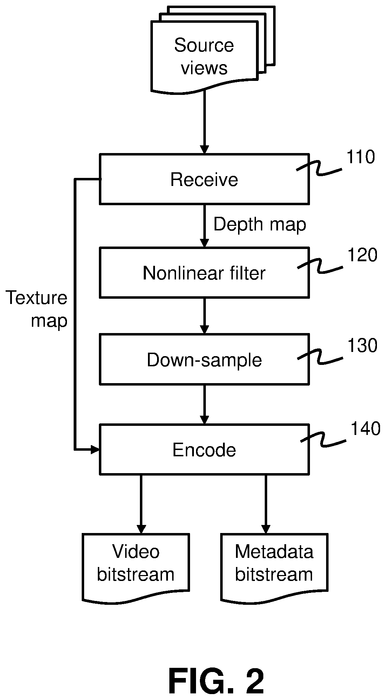

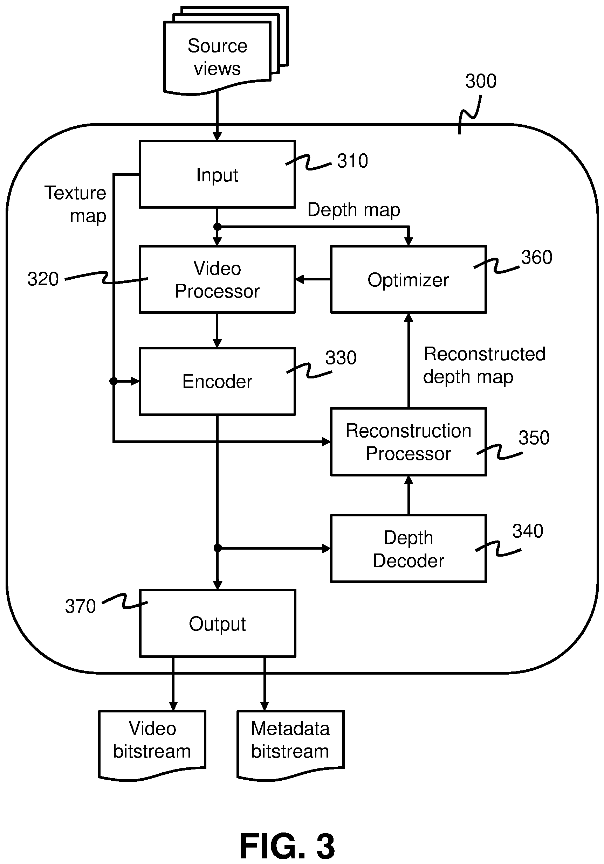

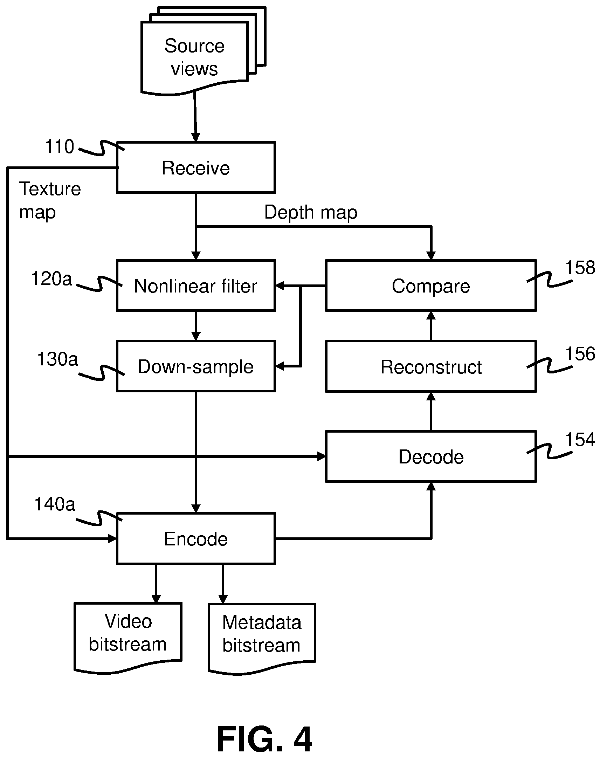

Fig. 2 illustrates an encoding method according to a first embodiment. Fig. 3 illustrates a video encoder that can be configured to carry out the method of Fig. 2. The video encoder comprises an input 310, configured to receive the video data. A video processor 320 is coupled to the input and configured to receive depth maps received by the input. An encoder 330 is arranged to receive processed depth maps from the video processor 320. An output 370 is arranged to receive and output a video bitstream generated by the encoder 330. The video encoder 300 also includes a depth decoder 340, a reconstruction processor 350 and an optimizer 360. These components will be described in greater detail in connection with the second embodiment of the encoding method, to be described below with reference to Fig. 4.

Referring to Figs. 2 and 3, the method of the first embodiment begins in step 110 with the input 310 receiving the video data, including a texture map and a depth map. In steps 120 and 130, the video processor 320 processes the depth map to generate a processed depth map. The processing comprises nonlinear filtering of the depth map, in step 120, and down-sampling of the filtered depth map, in step 130. In step 140, the encoder 330 encodes the processed depth map and the texture map to generate a video bitstream. The generated video bitstream is then output via the output 370.

The source views received at the input 310 may be the views captured by the array of cameras 10. However this is not essential and the source views need not be identical to the views captured by the camera. Some or all of the source views received at the input 310 may be synthesized or otherwise processed source views. The number of source views received at the input 310 may be larger or smaller than the number of views captured by the array of cameras 10.

In the embodiment of Fig. 2, the nonlinear filtering 120 and the down-sampling 130 are combined in a single step. A 'max pooling 2x2' down-scaling filter is used. This means that each pixel in the processed depth map takes the maximum pixel value in a 2x2 neighborhood of four pixels in the original input depth map. This choice of nonlinear filtering and down-sampling follows from two insights:

1. The result of downscaling should not contain intermediate i.e. 'in-between' depth levels. Such intermediate depth-levels would be produced when e.g. a linear filter is used. The inventors have recognized that intermediate depth levels often produce wrong results after view synthesis at the decoder end.

2. Thin foreground objects represented in the depth maps should be preserved. Otherwise e.g. a relatively thin object would disappear to the background. Note that the assumption is made that foreground i.e. nearby objects are encoded as high (bright) levels and background i.e. far-away objects are encoded as low (dark) levels (disparity convention). Alternatively a 'min pooling 2x2' down-scaler will have the same effect when using the z-coordinate coding convention (z-coordinate increases with distance from the lens).

This processing operation effectively grows the size of all local foreground objects and hence keeps small and thin objects. However, the decoder should preferably be aware of what operation was applied, since it should preferably undo the introduced bias and shrink all objects to align the depth map with the texture again.

According to the present embodiment, the memory requirement for the video decoder is reduced. The original pixel-rate was: 1Y + 0.5CrCb + 1D, where Y=luminance channel, CrCb=chrominance channels, D=depth channel. According to the present example, using down-sampling by a factor of four (2x2), the pixel-rate becomes: 1Y + 0.5CrCb + 0.25D. Consequently a 30% pixel-rate reduction can be achieved. Most practical video decoders are 4:2:0 and do not include monochrome modes. In that case a pixel reduction of 37.5% is achieved.

Fig. 4 is a flowchart illustrating an encoding method according to a second embodiment. The method begins similarly to the method of Fig. 2, with the input 310 of the video encoder receiving source views in step 110. In steps 120a and 130a, the video processor 320 processes the depth map according to a plurality of sets of processing parameters, to generate a respective plurality of processed depth maps (each depth map corresponding to a set of processing parameters). In this embodiment, the system aims to test each of these depth maps, to determine which will produce the best quality at the decoder end. Each of the processed depth maps is encoded by the encoder 330 in step 140a. In step 154, the depth decoder 340 decodes each encoded depth map. The decoded depth maps are passed to the reconstruction processor 350. In step 156, the reconstruction processor 350 reconstructs depth maps from the decoded depth maps. Then, in step 158, the optimizer 360 compares each reconstructed depth map with the original depth map of the source view to determine a reconstruction error. The reconstruction error quantifies a difference between the original depth map and the reconstructed depth map. Based on the result of the comparison, the optimizer 360 selects the set of parameters that led to the reconstructed depth map having the smallest reconstruction error. This set of parameters is selected for use to generate the video bitstream. The output 370 outputs a video bitstream corresponding to the selected set of parameters.

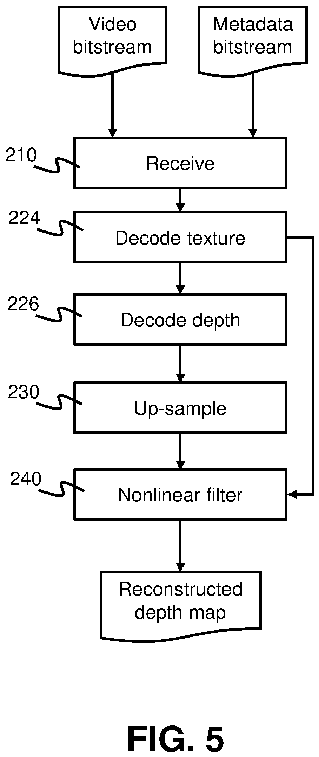

Note that the operation of the depth decoder 340 and the reconstruction processor 350 will be described in greater detail below, with reference to the decoding method (see Figs. 5-8).

Effectively, the video encoder 300 implements a decoder in-the-loop, to allow it to predict how the bitstream will be decoded at the far end decoder. The video encoder 300 selects the set of parameters that will give the best performance at the far end decoder (in terms of minimizing reconstruction error, for a given target bit rate or pixel rate). The optimization can be carried out iteratively, as suggested by the flowchart of Fig. 4 - with the parameters of the nonlinear filtering 120a and/or the down-sampling 130a being updated in each iteration after the comparison 158 by the optimizer 360. Alternatively, the video decoder can test a fixed plurality of parameter-sets, and this may be done either sequentially or in parallel. For example, in a highly parallel implementation, there may be N encoders (and decoders) in the video encoder 300, each of which is configured to test one set of parameters for encoding the depth map. This may increase the number of parameter-sets that can be tested in the time available, at the expense of an increase in the complexity and/or size of the encoder 300.

The parameters tested may include parameters of the nonlinear filtering 120a, parameters of the down-sampling 130a, or both. For example, the system may experiment with down-sampling by various factors in one or both dimensions. Likewise, the system may experiment with different nonlinear filters. For example, instead of a max filter (which assigns to each pixel the maximum value in a local neighborhood), other types of ordinal filter may be used. For instance, the nonlinear filter may analyze the local neighborhood around a given pixel, and may assign to the pixel the second highest value in the neighborhood. This may provide a similar effect to a max filter while helping to avoid sensitivity to single outlying values. The kernel size of the nonlinear filter is another parameter that may be varied.

Note that parameters of the processing at the video decoder may also be included in the parameter set (as will be described in greater detail below). In this way, the video encoder may select a set of parameters for both the encoding and decoding that help to optimize the quality versus bit rate/pixel rate. The optimization may be carried out for a given scene, or for a given video sequence, or more generally over a training set of diverse scenes and video sequences. The best set of parameters can thus change per sequence, per bit rate and/or per allowed pixel rate.

The parameters that are useful or necessary for the video decoder to properly decode the video bitstream may be embedded in a metadata bitstream associated with the video bitstream. This metadata bitstream may be transmitted/transported to the video decoder together with the video bitstream or separately from it.

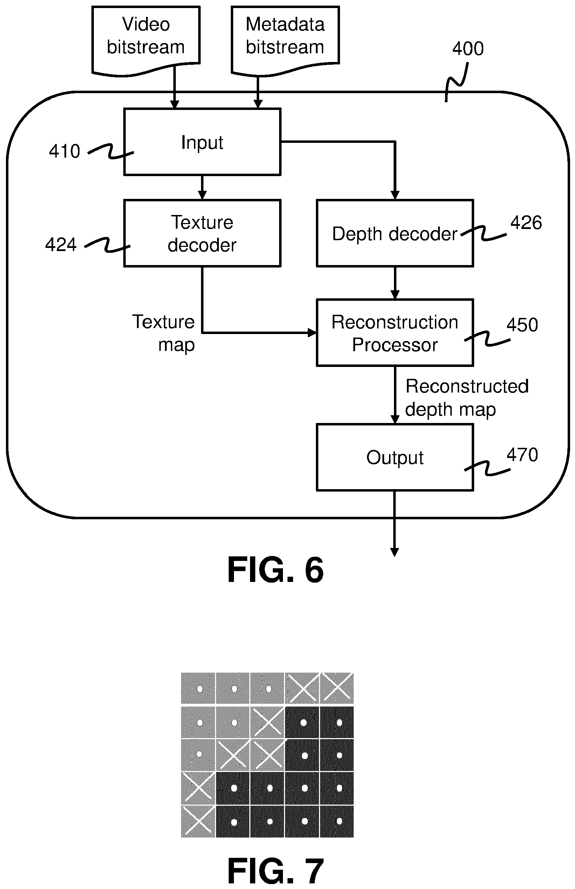

Fig. 5 is a flowchart of a method of decoding video data according to an embodiment. Fig. 6 is a block diagram of a corresponding video decoder 400. The video decoder 400 comprises an input 410; a texture decoder 424; a depth decoder 426; a reconstruction processor 450; and an output 470. The input 410 is coupled to the texture decoder 424 and the depth decoder 426. The reconstruction processor 450 is arranged to receive decoded texture maps from the texture decoder 424 and to receive decoded depth maps from the depth decoder 426. The reconstruction processor 450 is arranged to provide reconstructed depth maps to the output 470.

The method of Fig. 5 begins in step 210, with the input 410 receiving a video bitstream and optionally a metadata bitstream. In step 224, the texture decoder 424 decodes a texture map from the video bitstream. In step 226, the depth decoder 426 decodes a depth map from the video bitstream. In steps 230 and 240, the reconstruction processor 450 processes the decoded depth map to generate a reconstructed depth map. This processing comprises up-sampling 230 and nonlinear filtering 240. The processing - in particular, the nonlinear filtering 240 - may also depend on the content of the decoded texture map, as will be described in greater detail below.

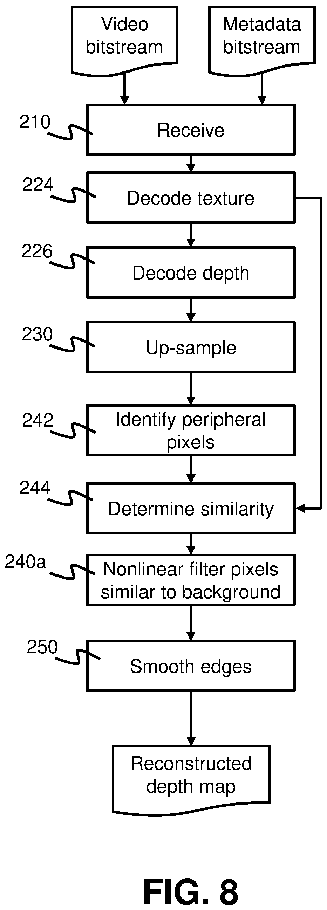

One example of the method of Fig. 5 will now be described in greater detail with reference to Fig. 8. In this embodiment, the up-sampling 230 comprises nearest-neighbor up-sampling, in which each pixel in a block of 2x2 pixels in the up-sampled depth map is assigned the value of one of the pixels from the decoded depth map. This 'nearest neighbor 2x2' up-scaler scales the depth map to its original size. Like the max-pooling operation at the encoder, this procedure at the decoder avoids producing intermediate depth-levels. The characteristics of the up-scaled depth map as compared with the original depth map at the encoder are predictable in advance: the 'max pooling' downscale filter tends to enlarge the area of foreground objects. Therefore, some depth pixels in the up-sampled depth map are foreground pixels that should instead be background; however, there are generally no background depth-pixels that should instead be foreground. In other words, after upscaling, objects are sometimes too large but are generally not too small.

In the present embodiment, in order to undo the bias (foreground objects that have grown in size), the nonlinear filtering 240 of the up-scaled depth-maps comprises a color adaptive, conditional, erosion filter (steps 242, 244, and 240a in Fig. 8). The erosion part (minimum operator) ensures that the object shrinks in size, while the color adaptation ensures that the depth edge ends up at the correct spatial position - that is, transitions in the full scale texture map indicate where the edges should be. Due to the non-linear way in which the erosion filter works (i.e. pixels are either eroded or they are not), the resulting object edges can be noisy. Neighboring edge pixels can for a minimally different input give different results on the *'erode or not-erode'* classification. Such noise has an adverse effect on object edge smoothness. The inventors have recognized that such smoothness is an important requirement for view-synthesis results of sufficient perceptual quality. Consequently, the nonlinear filtering 240 also comprises a contour smoothness filter (step 250), to smoothen the edges in the depth-map.

The nonlinear filtering 240 according to the present embodiment will now be described in greater detail. Fig. 7 shows a small zoomed-in area of an up-sampled depth map representing a filter kernel before the nonlinear filtering 240. Gray squares indicate foreground pixels; black squares indicate background pixels. The peripheral pixels of a foreground object are labeled X. These are pixels that may represent an extended/enlarged area of the foreground object, caused by the nonlinear filtering at the encoder. In other words, there is uncertainty about whether the peripheral pixels X are truly foreground or background pixels.

The steps taken to perform the adaptive erosion are:

1. Find local foreground edges - that is, peripheral pixels of foreground objects (marked X in Fig. 7). This can be done by applying a local threshold to distinguish foreground pixels from background pixels. The peripheral pixels are then identified as those foreground pixels that are adjacent to background pixels (in a 4-connected sense, in this example). This is done by the reconstruction processor 450 in step 242. A depth-map may - for efficiency - contain packed regions from multiple camera views. The edges on the borders of such regions are ignored as these do not indicate objects edges.

2. For the identified edge pixels (for example, the central pixel in the 5x5 kernel in Fig. 7), determine the mean foreground and mean background texture color in a 5x5 kernel. This is done based on the "confident" pixels only (marked with a dot ●) - in other words, the calculation of the mean foreground and mean background texture excludes the uncertain edge pixels X. They also exclude pixels from possibly neighboring patch regions that apply for example other camera views.

3. Determine similarity to the foreground - that is, *foreground confidence:*

$$C_{\text{foreground}} = \frac{D_{\text{background}}}{D_{\text{background}} + D_{\text{foreground}}}$$

Where: D indicates the (e.g. Euclidian) color-distance between the color of the center-pixel and the mean color of the background or foreground pixels. This confidence metric will be close to 1 if the central pixel is relatively more similar to the mean foreground color in the neighborhood. It will be close to zero if the central pixel is relatively more similar to the mean background color in the neighborhood. The reconstruction processor 450 determines the similarity of the identified peripheral pixels to the foreground in step 244.

4. Mark all peripheral pixels X for which $C_{foreground}$ < threshold. (e.g. 0.5)

5. Erode all marked pixels - that is, take the minimum value in a local (e.g. 3x3) neighborhood. The reconstruction processor 450 applies this nonlinear filtering to the marked peripheral pixels (which are more similar to the background than the foreground), in step 240a.

As mentioned above, this process can be noisy and may lead to jagged edges in the depth map. The steps taken to smoothen the object edges represented in the depth-map are:

1. Find local foreground edges - that is, peripheral pixels of foreground objects (like those marked X in Fig. 7)

2. For these edge pixels (for example the central pixel in Fig. 7), count the number of background pixels in a 3x3 kernel around the pixel of interest.

3. Mark all edge pixels for which the count > threshold.

4. Erode all marked pixels - that is, take the minimum value in a local (e.g. 3x3) neighborhood. This step is performed by the reconstruction processor 450 in step 250.

This smoothening will tend to convert outlying or protruding foreground pixels into background pixels.

In the example above, the method used the number of background pixels in a 3x3 kernel to identify whether a given pixel was an outlying peripheral pixel projecting from the foreground object. Other methods may also be used. For example, as an alternative or in addition to counting the number of pixels, the positions of foreground and background pixels in the kernel may be analyzed. If the background pixels are all on one side of the pixel in question, then it may be more likely to be a foreground pixel. On the other hand, if the background pixels are spread all around the pixel in question, then this pixel may be an outlier or noise, and more likely to really be a background pixel.

The pixels in the kernel may be classified in a binary fashion as foreground or background. A binary flag encodes this for each pixel, with a logical "1" indicating background and a "0" indicating foreground. The neighborhood (that is, the pixels in the kernel) can then be described by an n-bit binary number, where n is the number of pixels in the kernel surrounding the pixel of interest. One exemplary way to construct the binary number is as indicated in the table below:

| $b_7 = 1$ | $b_6 = 0$ | $b_5 = 1$ |
|---|---|---|

(continued)

| $b_4 = 0$ | | $b_3 = 0$ |
|---|---|---|
| $b_2 = 1$ | $b_1 = 0$ | $b_0\ 0 = 1$ |

In this example $b = b_7\ b_6\ b_5\ b_4\ b_3\ b_2\ b_1\ b_0 = 10100101_2$ = 165. (Note that the algorithm described above with reference to Fig. 5 corresponds to counting the number of non-zero bits in b (=4).)

Training comprises counting for each value of b how often the pixel of interest (the central pixel of the kernel) is foreground or background. Assuming equal cost for false alarms and misses, the pixel is determined to be a foreground pixel if it is more likely (in the training set) to be a foreground pixel than a background pixel, and vice versa.

The decoder implementation will construct b and fetch the answer (pixel of interest is foreground or pixel of interest is background) from a look up table (LUT).

The approach of nonlinearly filtering the depth map at both the encoder and the decoder (for example, dilating and eroding, respectively, as described above) is counterintuitive, because it would normally be expected to remove information from the depth map. However, the inventors have surprisingly found that the smaller depth maps that are produced by the nonlinear down-sampling approach can be encoded (using a conventional video codec) with higher quality for a given bit rate. This quality gain exceeds the loss in reconstruction; therefore, the net effect is to increase end-to-end quality while reducing the pixel-rate.

As described above with reference to Figs. 3 and 4, it is possible to implement a decoder inside the video encoder, in order to optimize the parameters of the nonlinear filtering and down-sampling and thereby reduce reconstruction error. In this case, the depth decoder 340 in the video encoder 300 is substantially identical to the depth decoder 426 in the video decoder 400; and the reconstruction processor 350 at the video encoder 300 is substantially identical to the reconstruction processor 450 in the video decoder 400. Substantially identical processes are carried out by these respective components.

When the parameters of the nonlinear filtering and down-sampling at the video encoder have been selected to reduce the reconstruction error, as described above, the selected parameters may be signaled in a metadata bitstream, which is input to the video decoder. The reconstruction processor 450 may use the parameters signaled in the metadata bitstream to assist in correctly reconstructing the depth map. Parameters of the reconstruction processing may include but are not limited to: the up-sampling factor in one or both dimensions; the kernel size for identifying peripheral pixels of foreground objects; the kernel size for erosion; the type of non-linear filtering to be applied (for example, whether to use a min-filter or another type of filter); the kernel size for identifying foreground pixels to smooth; and the kernel size for smoothing.

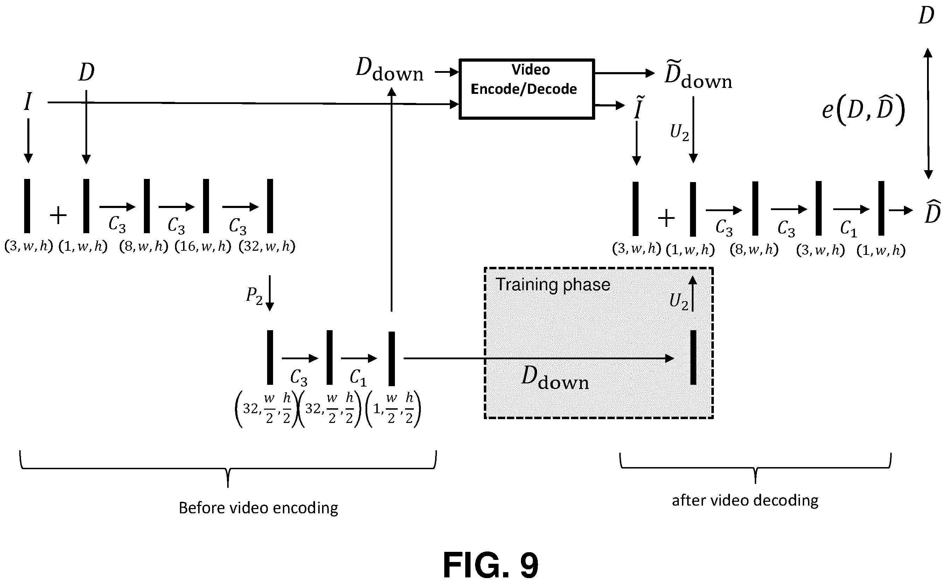

An alternative embodiment will now be described, with reference to Fig. 9. In this embodiment, instead of hand-coding nonlinear filters for the encoder and decoder, a neural network architecture is used. The neural network is split to model the depth down-scale and the up-scale operation. This network is trained end-to-end and learns both how to optimally down-scale and to optimally up-scale. However, during deployment (that is, for encoding and decoding of real sequences), the first part is before the video encoder and the second part is used after the video decoder. The first part thus provides the nonlinear filtering 120 for the encoding method; and the second part provides the nonlinear filtering 240 for the decoding method.

The network parameters (weights) of the second part of the network may be transmitted as meta-data with the bit-stream. Note that different sets of neural net parameters maybe created corresponding with different coding configurations (different down-scale factor, different target bitrate, etc.) This means that the up-scaling filter for the depth map will behave optimally for a given bit-rate of the texture map. This can increase performance, since texture coding artefacts change the luminance and chroma characteristics and, especially at object boundaries, this change will result in different weights of the depth up-scaling neural network.

Fig. 9 shows an example architecture for this embodiment, in which the neural network is a convolutional neural network (CNN). The symbols in the diagram have the following meanings:

$I$ = Input 3-channel full-resolution texture map
$\tilde{I}$ = Decoded full-resolution texture map
$D$ = Input 1-channel full-resolution depth map
$D_{down}$ = down-scaled depth map
$\tilde{D}_{down}$ = down-scaled decoded depth map
$C_k$ = Convolution with $k \times k$ kernel
$P_k$ = Factor $k$ downscale
$U_k$ = Factor $k$ upsampling

Each vertical black bar in the diagram represents a tensor of input data or intermediate data - in other words, the input data to a layer of the neural network. The dimensions of each tensor are described by a triplet $(p, w, h)$ where $w$ and $h$ are the width and height of the image, respectively, and $p$ is the number of planes or channels of data. Accordingly, the input texture map has dimensions $(3, w, h)$ - the three planes corresponding to the three color channels. The down-sampled depth map has dimensions $(1, w/2, h/2)$.

The downscaling $P_k$ may comprise a factor k downscale average, or a max-pool (or min-pool) operation of kernel size k. A downscale average operation might introduce some intermediate values but the later layers of the neural network may fix this (for example, based on the texture information).

Note that, in the training phase, the decoded depth map, $\tilde{D}_{down}$ is not used. Instead, the uncompressed down-scaled depth map $D_{down}$ is used. The reason for this is that the training phase of the neural net requires calculation of derivatives which is not possible for the non-linear video encoder function. This approximation will likely be valid, in practice - especially for higher qualities (higher bit rates). In the inference phase (that is, for processing real video data), the uncompressed down-scaled depth map $D_{down}$ is obviously not available to the video decoder. Therefore, the decoded depth map, $\tilde{D}_{down}$ is used. Note also that the decoded full-resolution texture map $\tilde{I}$ is used in the training phase as well as the inference phase. There is no need to calculate derivatives as this is helper information rather than data processed by the neural network.

The second part of the network (after video decoding) will typically contain only a few convolutional layers due to the complexity constraints that may exist at a client device.

Essential for using the deep learning approach is the availability of training data. In this case, these are easy to obtain. The uncompressed texture image and full resolution depth map are used at the input side before video encoding. The second part of the network uses the decoded texture and the down-scaled depth map (via the first half of the network as input for training) and the error is evaluated against the ground-truth full resolution depth map that was also used as input. So essentially, patches from the high-resolution source depth map serves both as input and as output to the neural network. The network hence has some aspects of both the auto-encoder architecture and the UNet architecture. However, the proposed architecture is not just a mere combination of these approaches. For instance, the decoded texture map enters the second part of the network as helper data to optimally reconstruct the high-resolution depth map.

In the example illustrated in Fig. 9, the input to the neural network at the video encoder 300 comprises the texture map $I$ and the depth map $D$. The down-sampling $P_2$ is performed in between two other layers of the neural network. There are three neural network layers before the down-sampling and two layers after it. The output of the part of the neural network at the video encoder 300 comprises the down-scaled depth map $D_{down}$. This is encoded by the encoder 320 in step 140.

The encoded depth map is transported to the video decoder 400 in the video bitstream. It is decoded by the depth decoder 426 in step 226. This produces the down-scaled decoded depth map $\tilde{D}_{down}$. This is up-sampled ($U_2$) to be used in the part of the neural network at the video decoder 400. The other input to this part of the neural network is the decoded full-resolution texture map $\tilde{I}$, which is generated by texture decoder 424. This second part of the neural network has three layers. It produces as output a reconstructed estimate $\tilde{D}$ that is compared with the original depth map $D$ to produce a resulting error $e$.

As will be apparent from the foregoing, the neural network processing may be implemented at the video encoder 300 by the video processor 320 and at the video decoder 400 by the reconstruction processor 450. In the example shown, the nonlinear filtering 120 and the down-sampling 130 are performed in an integrated fashion by the part of the neural network at the video encoder 300. At the video decoder 400, the up-sampling 230 is performed separately, prior to the nonlinear filtering 240, which is performed by the neural network.

It will be understood that the arrangement of the neural network layers shown in Fig. 9 is non-limiting and could be changed in other embodiments. In the example, the network produces 2x2 down-sampled depth maps. Different scaling factors could of course also be used.

In several of the embodiments described above, reference was made to max filtering, max pooling, dilation or similar operations, at the encoder. It will be understood that these embodiments assume that the depth is encoded as 1/d (or other similar inverse relationship), where d is distance from the camera. With this assumption, high values in the depth map indicate foreground objects and low values in the depth map denote background. Therefore, by applying a max- or dilation-type operation, the method tends to enlarge foreground objects. The corresponding inverse process, at the decoder, may be to apply a min- or erosion-type operation.

Of course, in other embodiments, depth may be encoded as d or log d (or another variable that has a directly correlated relationship with d). This means that foreground objects are represented by low values of d, and background by high values of d. In such embodiments, a min filtering, min pooling, erosion or similar operation may be performed at the encoder. Once again, this will tend to enlarge foreground objects, which is the aim. The corresponding inverse process, at the decoder, may be to apply a max- or dilation-type operation.

The encoding and decoding methods of Figures 2, 4, 5, 8 and 9, and the encoder and decoder of Figures 3 and 6, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs), graphics processing units (GPUs), or neural network accelerators (NNAs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM. Various storage media may be fixed within a computing device or may be transportable, such that the one or more programs stored thereon can be loaded into a processor.

Metadata according to an embodiment may be stored on a storage medium. A bitstream according to an embodiment may be stored on the same storage medium or a different storage medium. The metadata may be embedded in the bitstream but this is not essential. Likewise, metadata and/or bitstreams (with the metadata in the bitstream or separate from it) may be transmitted as a signal modulated onto an electromagnetic carrier wave. The signal may be defined according to a standard for digital communications. The carrier wave may be an optical carrier, a radio-frequency wave, a millimeter wave, or a near field communications wave. It may be wired or wireless.

To the extent that an embodiment is implemented partly or wholly in hardware, the blocks shown in the block diagrams of Figs. 3 and 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. For example, although Fig. 6 shows the texture decoder 424 and the depth decoder 46 as separate components, their functions may be provided by a single unified decoder component.

Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

**Claims**

1. A method of encoding video data comprising one or more source views, each source view comprising a texture map and a depth map, the method comprising:

   receiving (110) the video data;
   processing the depth map of at least one source view to generate a processed depth map, the processing comprising:

      nonlinear filtering (120), and
      down-sampling (130); and

   encoding (140) the processed depth map and the texture map of the at least one source view, to generate a video bitstream.

2. The method of claim 1, wherein the nonlinear filtering comprises enlarging the area of at least one foreground object in the depth map

3. The method of claim 1 or claim 2, wherein the nonlinear filtering comprises applying a filter designed using a machine learning algorithm.

4. The method of any one of the preceding claims, wherein the non-linear filtering is performed by a neural network comprising a plurality of layers and the down-sampling is performed between two of the layers.

5. The method of any one of the preceding claims, wherein the method comprises processing (120a, 130a) the depth map according to a plurality of sets of processing parameters, to generate a respective plurality of processed depth maps, the method further comprising:

      selecting the set of processing parameters that reduces a reconstruction error of a reconstructed depth map after the respective processed depth map has been encoded and decoded; and generating a metadata bitstream identifying the selected set of parameters.

6. A method of decoding video data comprising one or more source views, the method comprising:

      receiving (210) a video bitstream comprising an encoded depth map and an encoded texture map for at least one source view;
decoding (226) the encoded depth map, to produce a decoded depth map;
decoding (224) the encoded texture map, to produce a decoded texture map; and
processing the decoded depth map to generate a reconstructed depth map, wherein the processing comprises:

      up-sampling (230), and
      nonlinear filtering (240).

7. The method of claim 6, further comprising, before the step of processing the decoded depth map to generate the reconstructed depth map, detecting that the decoded depth map has a lower resolution than the decoded texture map

8. The method of claim 6 or claim 7, wherein the nonlinear filtering comprises reducing the area of at least one foreground object in the depth map.

9. The method of any one of claims 6-8, wherein the processing of the decoded depth map is based at least in part on the decoded texture map.

10. The method of any one of claims 6-9, comprising:

      up-sampling (230) the decoded depth map;
      identifying (242) peripheral pixels of at least one foreground object in the up-sampled depth map;
      determining (244), based on the decoded texture map, whether the peripheral pixels are more similar to the foreground object or to the background; and
      applying nonlinear filtering (240a) only to peripheral pixels that are determined to be more similar to the background.

11. The method of any one of claims 6-10, wherein the nonlinear filtering comprises smoothing (250) the edges of at least one foreground object.

12. The method of any one of claims 6-11, further comprising receiving a metadata bitstream associated with the video bitstream, the metadata bitstream identifying a set of parameters, the method further comprising processing the decoded depth map according to the identified set of parameters.

13. A computer program comprising computer code for causing a processing system to implement the method of any one of claims 1 to 12 when said program is run on the processing system.

14. A video encoder (300) configured to encode video data comprising one or more source views, each source view comprising a texture map and a depth map, the video encoder comprising:

an input (310), configured to receive the video data;
a video processor (320), configured to process the depth map of at least one source view to generate a processed depth map, the processing comprising:

nonlinear filtering (120), and
down-sampling (130);

an encoder (330), configured to encode the texture map of the at least one source view, and the processed depth map, to generate a video bitstream; and
an output (360), configured to output the video bitstream.

15. A video decoder (400) configured to decode video data comprising one or more source views, the video decoder comprising:

a bitstream input (410), configured to receive a video bitstream, wherein the video bitstream comprises an encoded depth map and an encoded texture map for at least one source view;
a first decoder (426), configured to decode from the video bitstream the encoded depth map, to produce a decoded depth map;
a second decoder (424), configured to decode from the video bitstream the encoded texture map, to produce a decoded texture map;
a reconstruction processor (450), configured to process the decoded depth map to generate a reconstructed depth map, wherein the processing comprises:

up-sampling (230), and
nonlinear filtering (240),

and an output (470), configured to output the reconstructed depth map.

**FIG. 1**

**FIG. 2**

**FIG. 3**

**FIG. 4**

Video
bitstream

Metadata
bitstream

210 ⟶ Receive

224 ⟶ Decode texture

226 ⟶ Decode depth

230 ⟶ Up-sample

240 ⟶ Nonlinear filter

Reconstructed
depth map

# FIG. 5

**FIG. 6**

**FIG. 7**

```
                    ┌──────────┐   ┌──────────┐
                    │  Video   │   │ Metadata │
                    │bitstream │   │bitstream │
                    └────┬─────┘   └────┬─────┘
                         │              │
                         ▼              ▼
         210   ┌──────────────────────────────┐
          〜  │           Receive             │
               └───────────────┬──────────────┘
                               ▼
         224   ┌──────────────────────────────┐──────┐
          〜  │        Decode texture         │      │
               └───────────────┬──────────────┘      │
                               ▼                      │
         226   ┌──────────────────────────────┐       │
          〜  │         Decode depth          │       │
               └───────────────┬──────────────┘       │
                               ▼                       │
         230   ┌──────────────────────────────┐        │
          〜  │          Up-sample            │        │
               └───────────────┬──────────────┘        │
                               ▼                        │
         242   ┌──────────────────────────────┐         │
          〜  │     Identify peripheral        │         │
               │          pixels                │         │
               └───────────────┬──────────────┘         │
                               ▼                         │
         244   ┌──────────────────────────────┐──────────┘
          〜  │      Determine similarity      │◄─────
               └───────────────┬──────────────┘
                               ▼
        240a   ┌──────────────────────────────┐
          〜  │   Nonlinear filter pixels      │
               │    similar to background       │
               └───────────────┬──────────────┘
                               ▼
         250   ┌──────────────────────────────┐
          〜  │         Smooth edges          │
               └───────────────┬──────────────┘
                               ▼
               ┌──────────────────────────────┐
               │         Reconstructed          │
               │          depth map             │
               └──────────────────────────────┘
```

# FIG. 8

**FIG. 9**

Europäisches
Patentamt

European
Patent Office

Office européen
des brevets

## EUROPEAN SEARCH REPORT

Application Number

EP 19 21 7418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/269458 A1 (GRAZIOSI DANILLO B [US] ET AL) 25 October 2012 (2012-10-25) | 1,2, 6-11, 13-15 | INV. H04N21/2343 H04N21/2365 |
| Y | * paragraphs [0007], [0008], [0033], [0034], [0041] - [0043], [0064] - [0117] * | 3-5,12 | H04N21/4728 H04N21/81 H04N13/139 H04N13/161 |
| Y | US 2019/110038 A1 (DIVERDI STEPHEN JOSEPH [US] ET AL) 11 April 2019 (2019-04-11) * paragraphs [0052], [0053]; figure 7 * | 3-5,12 | H04N13/178 H04N21/218 H04N19/597 H04N21/4402 |
| A | GANGWAL O P ET AL: "Real-time implementation of depth map post-processing for 3D-TV on a programmable DSP (TriMedia)", CONSUMER ELECTRONICS, 2009. ICCE '09. DIGEST OF TECHNICAL PAPERS INTERNATIONAL CONFERENCE ON, IEEE, PISCATAWAY, NJ, USA, 10 January 2009 (2009-01-10), pages 1-2, XP031467054, ISBN: 978-1-4244-4701-5 * the whole document * | 1-15 | H04N21/2662 H04N13/243 G06N3/08 H04N19/154 H04N19/59 H04N13/128 G06T5/30 |
| A | JONGBEOM JEONG ET AL: "3DoF+ 360 Video Location-Based Asymmetric Down-Sampling for View Synthesis to Immersive VR Video Streaming", SENSORS, vol. 18, no. 9, 18 September 2018 (2018-09-18), page 3148, XP055591982, DOI: 10.3390/s18093148 * the whole document * | 1-15 | |

TECHNICAL FIELDS SEARCHED (IPC)

H04N
G06N
G06T

-/--

The present search report has been drawn up for all claims

| Place of search | Date of completion of the search | Examiner |
|---|---|---|
| Munich | 21 April 2020 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 19 21 7418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PAYMAN AFLAKI (TUT) ET AL: "3DV-CE3: Non-linear Depth Map Upsampling for 3DV-ATM Post-Processing", 1. JCT-3V MEETING; 101. MPEG MEETING; 16-7-2012 - 20-7-2012; STOCKHOLM; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-A0109, 10 July 2012 (2012-07-10) , XP030130108, * the whole document * | 1-15 | H04N13/271 H04N19/117 |
| A | XU XUYUAN ET AL: "Depth map misalignment correction and dilation for DIBR view synthesis", SIGNAL PROCESSING. IMAGE COMMUNICATION, ELSEVIER SCIENCE PUBLISHERS, AMSTERDAM, NL, vol. 28, no. 9, 22 April 2013 (2013-04-22) , pages 1023-1045, XP028723635, ISSN: 0923-5965, DOI: 10.1016/J.IMAGE.2013.04.003 * the whole document * | 1-15 | |
| A | RIEMENS O P GANGWAL NXP RESEARCH (NETHERLANDS) A K ET AL: "Multistep joint bilateral depth upsampling", VISUAL COMMUNICATIONS AND IMAGE PROCESSING; 20-1-2009 - 22-1-2009; SAN JOSE,, 20 January 2009 (2009-01-20), XP030081730, * the whole document * | 1-15 | **TECHNICAL FIELDS SEARCHED (IPC)** |
| A | US 2016/063715 A1 (WAN ERNEST YIU CHEONG [AU]) 3 March 2016 (2016-03-03) * paragraph [0007] * | 1-15 | |

The present search report has been drawn up for all claims

| Place of search | Date of completion of the search | Examiner |
|---|---|---|
| Munich | 21 April 2020 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 19 21 7418

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2020

| Patent document cited in search report | | Publication date | Patent family member(s) | | Publication date |
|---|---|---|---|---|---|
| US 2012269458 | A1 | 25-10-2012 | NONE | | |
| US 2019110038 | A1 | 11-04-2019 | AU 2018211217 | A1 | 02-05-2019 |
| | | | CN 109660783 | A | 19-04-2019 |
| | | | DE 102018006050 | A1 | 11-04-2019 |
| | | | GB 2567530 | A | 17-04-2019 |
| | | | US 2019110038 | A1 | 11-04-2019 |
| US 2016063715 | A1 | 03-03-2016 | AU 2014218390 | A1 | 17-03-2016 |
| | | | US 2016063715 | A1 | 03-03-2016 |

EPO FORM P0459

For more details about this annex : see Official Journal of the European Patent Office, No. 12/82

**REFERENCES CITED IN THE DESCRIPTION**

**Non-patent literature cited in the description**

- **COLLET et al.** High-quality streamable free-viewpoint video. *ACM Trans. Graphics (SIGGRAPH),* 2015, vol. 34, 4